Europäisches Patentamt

European Patent Office

Office européen des brevets

(11) Publication number: **0 441 027 B1**

# EUROPEAN PATENT SPECIFICATION

(45) Date of publication of patent specification: **12.04.95**    (51) Int. Cl.6: **C08L 23/10**, C08J 5/18

(21) Application number: **90311265.4**

(22) Date of filing: **15.10.90**

(54) **Modified polyolefin film with stable twist retention, dead fold properties and barrier characteristics.**

(30) Priority: **01.02.90 IT 1922890**
**01.08.90 US 561023**

(43) Date of publication of application:
**14.08.91 Bulletin 91/33**

(45) Publication of the grant of the patent:
**12.04.95 Bulletin 95/15**

(84) Designated Contracting States:
**AT BE CH DE DK ES FR GB GR IT LI LU NL SE**

(56) References cited:
**EP-A- 0 288 227**
**EP-A- 0 317 276**
**EP-A- 0 343 647**
**US-A- 3 663 488**

(73) Proprietor: **Borden, Inc.**
**180 East Broad Street**
**Columbus**
**Ohio 43215 (US)**

(72) Inventor: **Buzio, Pierpaolo**
**29 Carso Europa**
**RHO,**
**Milan (IT)**

(74) Representative: **Wilkinson, Stephen John et al**
**Stevens, Hewlett & Perkins**
**1 St. Augustine's Place**
**Bristol BS1 4UD (GB)**

Rank Xerox (UK) Business Services
(3.10/3.09/3.3.3)

## Description

The present invention is directed to modified polyolefin films with stable twist retention and dead fold properties to be employed in wrapping in general, and particularly in wrapping small items.

### PRIOR ART

The wrapping of goods, in particular of small items such as candies, sweets, chocolate bars by twist folding of films, both manually and automatically, has been known for many years.

The materials employed to date have included paper, foil and various films, such as cellophane, high density polyethylene, cast polypropylene, Barex® nitrile polymer, and polyester.

With the advent of high speed wrapping machines, it was necessary to have recourse to materials with particular characteristics, and to this end, certain films of rigid, amorphous polymers such as polyvinylchloride (PVC), polystyrene and acrylic copolymers have been employed. Said materials, however, do not fully possess the physical characteristics required for optimal packaging results, such as high rigidity, twist retention, oxygen and moisture barrier, high slippage properties, and easy cutting without brittleness.

Polypropylene and polyethylene films, which would have cost advantages with respect to the above mentioned materials, cannot, on the other hand, be employed in an unmodified form because of their lack of twist retention, and moderate permeability.

Various attempts to employ oriented films for this type of wrapping have exhibited only limited success.

Thus, in the Japanese Patent 59-68212 (Mitsui Toatsu Chemical Co.) a polyolefin film with improved rigidity and twist retention is obtained by mono-axial longitudinal orientation. Such a film, however, has poor properties in the transverse direction and has a tendency to tearing and fissuring, and its use is therefore limited to longitudinal twist wrapping.

In the German Patent DE 3514398A1 (Hoechst) a biaxially oriented film is described consisting of polypropylene, inorganic fillers and polymers such as polyamides or polymethylmethacrylate. This type of film, however, shows poor twist retention.

In the European Application 0288227, published October 26, 1988 (Exxon Chemicals), a biaxially-oriented film is described which is obtained by extrusion of a two component blend consisting of a polypropylene compound, (or a copolymer of propylene with up to 20 weight percent of another olefin, e.g. ethylene) and 20 to 30% by weight of a low molecular weight rosin or resin. The process described therein for obtaining extruded oriented films presents serious difficulties in the extrusion and orientation stages, because of the low viscosity of the melt, low softening point, and tendency to stick to the stretching rolls, so that this process is not readily feasible on a commercial scale. Achieving compatibilization of polypropylene and polyethylene by selection and mixing of a low molecular weight resin is not taught, but rather blending of the polypropylene with a copolymer of propylene and another olefin is utilized.

Similarly, U.S. Patent 3,663,488, issued May 16, 1972 to Kail, et al., teaches the use of certain hydrogenated hydrocarbon polymers blended with polyolefin materials to produce a two component composition useful as an extruded film for twist wrapping.

U.S. Patent 4,842,187 issued June 27, 1989 to Janocha, et al., describes an opaque, biaxially draw-oriented thermoplastic film for candy twist wrapping. The film of Janocha, et. al is formed from a polymer mixture comprising from 40 to 60% by weight of polypropylene and from 35 to 55% by weight of polystyrene, and from 5 to 15% by weight of an inorganic or organic filler.

U.S. Patent 4,786,533, issued November 22, 1988 to Crass, et al., teaches the preparation of a twist wrap film produced from a polypropylene base layer and a polydialkylsiloxane top layer. The polypropylene base layer additionally contains a low molecular weight hydrocarbon resin in an amount of 10 to 40% by weight. The polypropylene therein is preferably an isotactic propylene homopolymer or a copolymer of ethylene and propylene having an ethylene content of less than about 10% by weight. This is a two component base layer.

U.S. Patent 2,956,042 issued October 11, 1960 to Underwood, et al., teaches the preparation of a polyethylene film into which has been incorporated 0.1 to 2.0 parts by weight of polypropylene.

U.S. Patent 3,036,987 issued May 29, 1962 to Ranalli teaches the blending of isotactic polypropylene with linear amorphous copolymer of propylene and ethylene, wherein the ethylene content is from 30 to 70% by weight.

EP-A-0343647 discloses a polypropylene-based resin sheet which comprises 60-98% by weight of a polypropylene-based resin, 1-30% by weight of a petroleum resin and 1-20% by weight of a low-crystalline or amorphous ethylene $\alpha$-olefin copolymer.

Recently, Courtaulds Films has marketed a transparent coextruded OPP film (SHX 800) for twist wrapping. However, the film consists of 3 layers of modified homopolymer.

A. Schulman Plastics has marketed a resin masterbatch (POLYBATCH OPR 6420) for the production of BOPP films with higher stiffness and improved barrier properties.

Compatibilization of polypropylene materials and high density polyethylene materials through the incorporation of a glassy amorphous low molecular weight resin is not previously known.

Therefore, it would be desirable to have a modified polyolefin film which: (1) possesses the cost advantages of polypropylene and polyethylene; (2) is clear or pigmentable; (3) is easily processed and extruded; (4) exhibits good twist retention; (5) exhibits good dead fold retention; (6) exhibits good oxygen barrier properties; (7) exhibits good moisture barrier properties; (8) exhibits good impact strength and tear resistance; and (9) is a blend rather than a copolymer.

## SUMMARY OF THE INVENTION

We now have found that it is possible to obtain a biaxially oriented film with these desired properties by using a compatibilized blend of polypropylene and polyethylene, said film particularly characterized by good clarity, twist retention and dead fold properties, low water vapor transmission and low oxygen transmission. The film is therefore suitable for packaging uses in general, and particularly for packaging small items, by twist wrapping. The films of the present invention comprise a ternary mixture of (1) isotactic polypropylene; (2) high density polyethylene; and (3) a glassy, amorphous low molecular weight resin.

According to the present invention, the process for making said film comprises in one embodiment the steps of:

(a) mixing the three components to obtain a homogeneous blend;

(b) extruding the blend to obtain a sheet; and

(c) stretching the sheet in both the longitudinal and the transverse directions to obtain the biaxially oriented film.

## DETAILED DESCRIPTION OF THE INVENTION

The film of the present invention comprises at least a ternary mixture of (1) isotactic polypropylene; (2) high density polyethylene; and (3) an amorphous, glassy, low molecular weight resin. Additional components or additives are also useful herein and the mixture can comprise two or more glassy resins. Thus, the ternary systems herein can include quaternary and higher systems.

The process for its preparation comprises in another embodiment the following steps:

(a) mixing of the three or more components, preferably dry mixing;

(b) extrusion or melt blending of the mixture to obtain a homogeneous composition;

(c) cooling and pelletizing the homogeneous composition;

(d) forming a sheet by extrusion of the homogeneous composition; and

(e) stretching the extruded sheet in both longitudinal and transverse directions to form a film.

It is preferred, but not required, to cool and pelletize the extruded composition and then re-extrude the pelletized composition. This improves the homogeneity and mixing relative to that obtained by simply hot extruding the three component mixture. However, for some applications and uses of the films of the present invention, the additional cooling and pelletizing is not necessary. It is also possible to preblend and/or pre-pelletize a mixture of polypropylene and glassy resin.

The three components of the mixture according to the present invention preferably have the following characteristics:

| | |
|---|---|
| Component 1: | Isotactic polypropylene having a melt flow rate of from 0.5 to 10 and more preferably from 0.5 to 5, when measured at 230°C/2.16 Kg. and a melting point (MP) of from 155 to 170°C. Alternatively, instead of polypropylene, a propylene-ethylene copolymer may be employed containing from 0.1 to 10% ethylene by weight, the ethylene being distributed randomly or in blocks in the copolymer, said copolymer preferably having a melting point of from 140° to 165°C. It is preferred herein to have a polypropylene or copolymer with a melting point above 140°C. |
| Component 2: | High density polyethylene (HDPE) having a melt flow index (MFI) of from 0.1 to about 40 when measured at 190°C/5.0 Kg. and density of from 0.940 to 0.965 grams/cm$^3$. By "HDPE" herein is meant both linear high density polyethylene and conventional high density polyethylene which contains some degree of branching in the chains. |
| Component 3: | An amorphous, low molecular weight, glassy resin which is partially or totally hydroge- |

nated and having a molecular weight of from 500 to 2,000 and a softening point (ring and ball) of from 70 to 170°C. Some unsaturation of the glassy resin is acceptable up to an iodine number of about 50, however, increasing the amount of unsaturation increases the undesirable color and odor.

The amorphous, low molecular weight, glassy resin (Component 3 above) is selected from the group consisting of pine resins, such as rosin derivatives, and polymers derived from the polymerization of terpene monomers, dimers, polymers and resins, and alicyclic, monocyclic and bicyclic monomers, and mixtures thereof. Preferred glassy resins are saturated terpenes demonstrating true mixability with polypropylene.

Also suitable herein as the third component are hydrocarbon polymers and resins such as aliphatic resins, aromatic resins, aliphatic/aromatic copolymer resins, indene resins, coumarone and styrene resins, $C_9$ hydrogenated resins, phenol resins such as alkyl-phenol and terpene-phenol resins, and mixtures thereof.

Suitable compatible hydrogenated hydrocarbon polymers are those which have an iodine value (ASTM D-1959) less than 50, a drop softening point above about 70°C and an average molecular weight (Rast) of about 500 and above. Such materials include the polymers produced by the hydrogenation of the resinous polymerization products obtained by the catalytic polymerization of mixed unsaturated monomers derived from the deep cracking of petroleum, as well as higher polymers obtained by polymerization and/or copolymerization of terpene hydrocarbons such as the monocyclic, and bicyclic monoterpenes and their mixtures, including allo-ocimene, carene, isomerized pinene, pinene, dipentene, terpinene, terpinolene, limonene, turpentine, a terpene cut or fraction, and various other terpenes, followed by hydrogenation under pressure. Particularly useful starting materials which can be polymerized and then hydrogenated to form the third component glassy resin employed in this invention are mixtures of unsaturated monomers composed essentially of dienes and reactive olefines derived from deep cracking petroleum, the vinyl-aromatic hydrocarbon cuts or fractions separated by distilling cracked petroleum, and terpene mixtures.

In a preferred embodiment, the weight percentage composition of the ternary mixture in the films of the present invention is as follows: polypropylene (or propylene-ethylene copolymer) 40 to 90%; polyethylene 5 to 25%; and glassy resin 5 to 35%.

To achieve the desired twist wrap retention and dead fold properties, it is preferred that at least 15% by weight of the ternary mixture be glassy resin. It is noted in films of the present invention that when the low molecular weight glassy resin is present in the film formulation in an amount above about 15% by weight, the resulting extruded film is usually tacky. For some applications, such tackiness may be acceptable, even desirable. For applications in which such tackiness is not preferred, less than 15% by weight glassy resin is employed, or alternatively a dual-layer or multilayer film structure is produced by coextrusion, laminating or in any other way contacting or combining the tacky film with at least one less tacky or non-tacky layer. Such a layer, often called a skin layer, is preferably selected to receive a printing ink. A homopolymer of polypropylene is effective herein as the skin layer over a core layer of the inventive film.

The three components are preferably admixed in the dry state and extruded by any conventional method to obtain a molten, homogeneous composition. The composition can be, but need not be, pelletized, which improves the homogeneity.

The cooled composition is, or the pellets are, then extruded to obtain a sheet which is subsequently stretched in both the longitudinal and the transverse directions, generally at a temperature of from 100 to 180°C and at stretch ratios of from 3.5/1 to 10/1 in each direction. It is preferred herein that the stretching or orienting in the longitudinal direction be done at 100 to 140°C with a stretch ratio of 3.5/1 to 8/1 and in the transverse direction at 130 to 180°C with a stretch ratio of 5/1 to 10/1.

The stretching process may be carried out on, for example, conventional machines such as tenter frame and double bubble types. The biaxial orientation of the film can be a simultaneous or sequential process.

An extruded film is thus obtained having a preferred thickness of from 15 to 35 microns, which is transparent, has high rigidity and resistance to tearing and fissuring, good slippage properties, easy cutting without brittleness and good dead fold and twist retention. The films of the present invention provide cost advantage over the use of foil, paper, cellophane, polyester, PVC, Barex nitrile polymer, and polystyrene; and display performance advantages over the use of conventional cast polypropylene and high density polyethylene films.

One advantage of the compatibilized and modified polyethylene/polypropylene films of the present invention relative to conventional PVC films is that the instant films are approximately one-third less dense than PVC films. Thus a substantial cost savings due to wrapping of more items per pound of film is achieved by the invention relative to PVC films.

The desirable transparency of the film is obtained by the compatibilizing effect of the third component (the amorphous, glassy, low molecular weight resin or resins) on the blend of polypropylene and polyethylene. Without the third component, the polypropylene and polyethylene are so incompatible as to produce opaque, or non-transparent, films. Thus the compatibilizing effect of the low molecular weight resin is very important to the invention. In certain formulations of the present invention, or under certain extrusion conditions, a slight haze or opacity of the film is present due to surface roughness. This is readily overcome by the addition of skin layers of homopolymer of polypropylene. The ability of the skin layers to eliminate the haze in the inventive core layer illustrates that the haze is predominantly a function of surface roughness and not caused by incompatability of the components.

The order and method of mixing the three components in the compositions used to prepare the films of the present invention is not critical. The polypropylene or propylene-ethylene copolymer can be melt blended with the HDPE, and the low molecular weight glassy resin added later. Alternatively, and preferably the polypropylene or propylene-ethylene copolymer can be melt blended with the low molecular weight glassy resin, and the HDPE can be added later. In yet another embodiment, the three components can be combined and mixed simultaneously. Melt blending (twin screw, Banbury) is operative herein to achieve the desired homogeneous composition containing the three components.

The present ternary composition used to produce the inventive films is more practical to melt blend than the conventional binary film compositions containing only the polypropylene and a low molecular weight resin because of the large viscosity differences between these components. The presence in the instant ternary composition of the polyethylene greatly facilitates the mixing and homogeneity of the present compositions relative to the prior art binary compositions.

It has also been discovered that the addition of the HDPE to the composition reduces the amount of low molecular weight glassy resin needed to achieve the required twist retention characteristics. However, reducing the level below about 5% by weight glassy resin in the ternary composition results in loss of compatibilization of the polypropylene or propylene-ethylene copolymer and the HDPE. Increasing the weight percent of glassy resin in the ternary composition reduces the melting point of the cooled homogeneous ternary composition and increases its glass transition temperature.

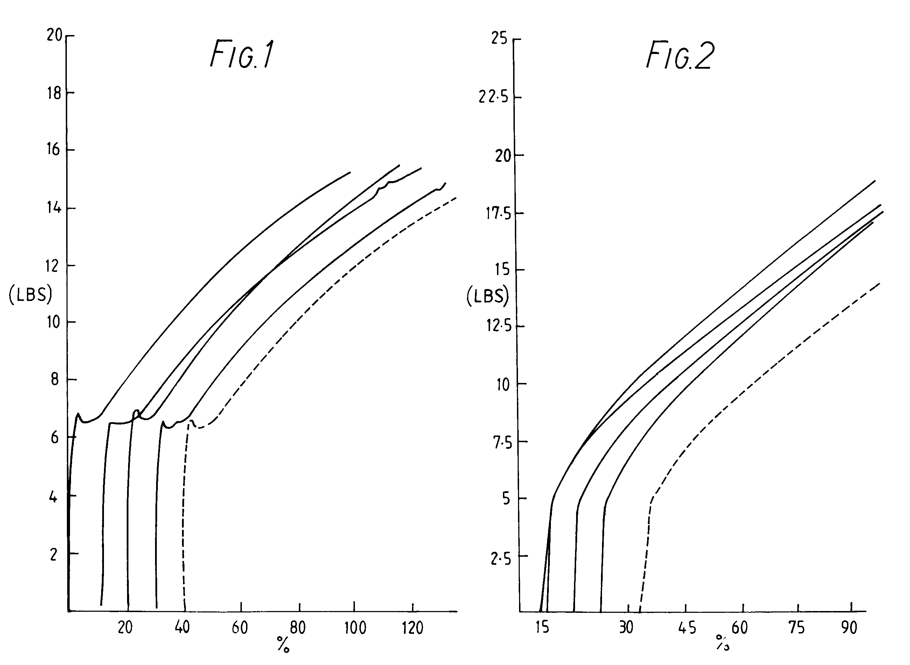

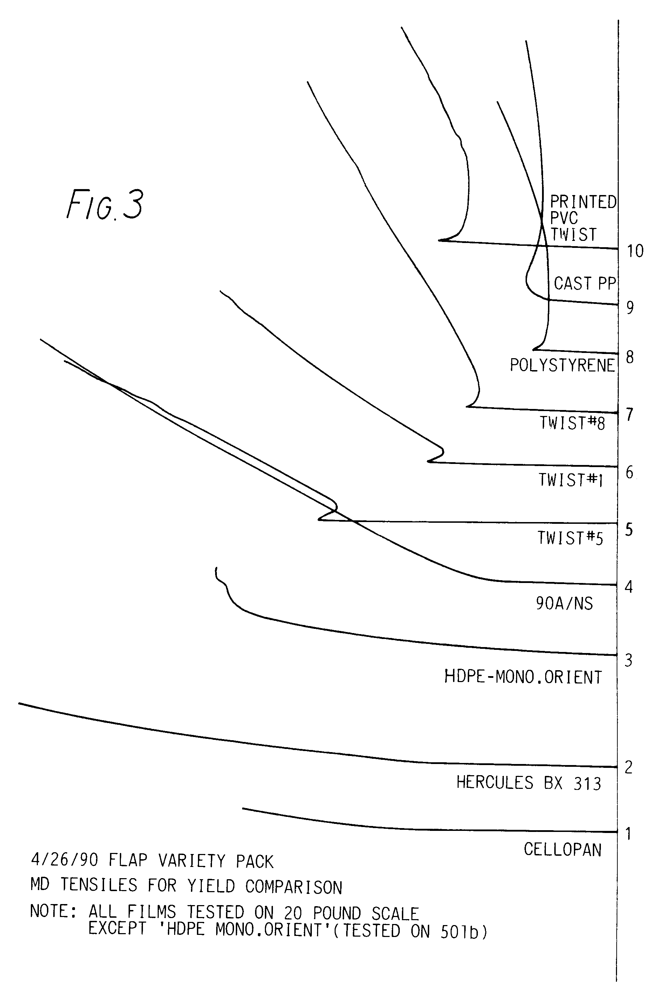

The extruded films exhibit twist retention superior to prior art polypropylene or polyethylene films. A specific parameter to which the twist retention is correlated is the non-recoverable yield point of the load elongation curves of the films according to the present invention, as shown in FIG. 1 in comparison with the curves of FIG. 2 relating to conventional BOPP films. The abscissae in the figures represent percent elongation and the ordinates the load in pounds. As shown in FIG. 3 the inventive films of curve 5 and curve 7 demonstrate permanent deformation and the shoulder on the curves indicate the non-recoverable yield point. The absence of a similar shoulder in FIG. 2 for standard non-modified oriented polypropylene (OPP) films indicates elastic deformation and hence, recoverability. FIGURE 3 shows the degree of non-recoverable yield points for several films. The numbered curves in FIG. 3 represent: 1 = cellopan; 2 = Hercules BX313; 3 = mono oriented high density polyethylene; 4 = Proponite 90 A/NS; 5 = Twist 5 which is a white pigmented ternary inventive film comprising 70% polypropylene, 20% Escorez resin, and 10% HDPE; 6 = Twist 1 which is a film from a binary composition of 78% polypropylene and 22% Escorez 5320 resin; 7 = Twist 8 which is an inventive quaternary film of 70% polypropylene, 12% Escorez 5320 resin, 5% Arkon P140 resin, and 13% HDPE; 8 = polystyrene; 9 = cast polypropylene; and 10 is a conventional PVC film.

In addition to improved twist retention, the films of the present invention also exhibit improved dead fold properties relative to conventional oriented polyolefins, such as BOPP. By "dead fold" herein is meant a measure of the film's ability to retain a fold or crease. Materials with excellent dead fold property include, for example, metal foils, paper, polystyrene and PVC. A simple test for dead fold property is performed by stamping a 180° fold in the film at ambient temperature and then measuring the angle to which the fold opens thereafter. The lower or smaller angles are desirable because this indicates greater dead fold retention. As shown in Table 5, the extruded films of the present invention (Twist 5 and Twist 8) exhibit dead fold property better than prior art oriented polypropylene films (90 A/NS) and the Hercules binary film.

It is believed, but the inventor does not wish to be limited to the theory that, improved twist retention, or dead fold property, of the films of the present invention is related to achieving a non-recoverable yield point on the stress/strain relationship. One feature of the film of the present invention is that it exhibits a non-recoverable yield point at a very low strain (elongation). This yield point is a function of the percentage of each component present in the ternary composition. Thus it has been discovered that the desired non-recoverable yield point in the stress/strain relationship for the films of the present invention is attained when the ternary composition comprises:

| polypropylene (or propylene-ethylene copolymer) | 40 - 90 wgt.% |
| polyethylene | 5 - 25 wgt.% |
| low molecular weight glassy resin | 5 - 35 wgt.% |

Ternary compositions of 60 - 70% high density polyethylene, 10 - 20% propylene-ethylene copolymer, and 10 - 30% low molecular weight glassy resin did not produce acceptable film, due to inability to be orientated. This is overcome in the present invention by utilizing 40 to 90 weight percent polypropylene or propylene-ethylene in combination with the HDPE and glassy resin, to provide desired rigidity and ability to orient the film.

It has been discovered that increasing the level of low molecular weight glassy resin in the film formulation has a strong positive effect on machine direction yield strength, the non-recoverable yield point, and dead fold properties. Thus, for maximizing dead fold properties, increased levels of the low molecular weight glassy resin in the film formulation are preferred. Increasing the amount of high density polyethylene in the film also has a positive effect on processing by increasing the flowability of the molten homogenous composition, and a positive effect on the dead fold characteristic. Thus, when dead fold property is more important than twist retention, a preferred embodiment of the present invention would have 30-35% by weight of the low molecular weight glassy resin and 20-25% by weight of high density polyethylene, with the remainder being essentially polypropylene or propylene-ethylene copolymer.

Another significant advantage of the films of the present invention is the oxygen and moisture barrier properties exhibited. Packaging should ideally provide not only protection from dust, dirt or other contamination, but also should provide protection from spoilage often caused by oxidation and/or moisture. However, improved barrier properties against oxygen and moisture transmission are generally not prerequisites for twist wrapping film applications because no sealing is generally involved in twist wrapping. The films of the present invention can provide about 50% improvement in oxygen barrier and up to about 40% improvement in moisture barrier properties relative to the prior art unmodified oriented polypropylene. Table 3 illustrates the water vapor transmission and oxygen permeability of four samples of the inventive ternary film compared to control samples of propylene/resin films (Films E and F) and unmodified oriented polypropylene film (Film G). The inventive unpigmented films exhibited 0.22 and 0.18 grams of water vapor transmitted per 100 square inches per 24 hours, per mil (5.6 and 4.6 gm$^{-2}$ per hour per mm), surprisingly less than the control samples which exhibited a value of 0.31 (7.9). The oxygen permeability of the films of this invention were also less than that of the prior art control samples: 47.7, 53.5, 42.1 and 42.6 cc per 100 square inches per 24 hour per mil (1210, 1360, 1070 and 1080 cm$^3$ m$^{-2}$ per hour per mm), versus 94.8 (2410) for the BOPP control sample (Film G). Pigmented films (C and D) of the present invention showed better oxygen and moisture vapor barrier properties than unpigmented films (A and B), as shown in Table 3. Although not presented in Table 3, an inventive quaternary film Twist 8 (discussed above and represented in FIG. 3 curve 7) exhibited values of 59.8 (1520) and 0.21 (5.3) for the O$_2$TR and WVTR, respectively, for 100 gauge film.

Table 3 also illustrates the improved elastic modulus (ASTM D882) of the films of the present invention relative to conventional or prior art BOPP film.

Table 4 illustrates the results of twist retention testing of an Exxon Film, a Courtaulds Shorko SHX 800 film, and an inventive ternary white pigmented film (Twist 5) comprising 70% polypropylene, 20% Escorez resin and 10% HDPE. The inventive film exhibits higher twist retention (300°) relative to the binary films (270°). The test was performed by folding a film sample once in the middle along the transversal direction, then clamping the film tightly on one side with a fixed clamp and on the other side (at a distance of 2mm) with a rotating clamp. After one rotation of 360° of the clamp, the sample was quickly released and the retained angle was measured. Thus, higher retained angles represent better twist retention.

Due to the presence of the above stated characteristics or properties, the films according to the present invention may be successfully employed for packaging in general and for packaging small items in particular, by wrapping with both lateral and longitudinal twist with the aid of high speed machines. The films of the present invention are, for example, twisted 1 1/2 times or 540 degrees. Once so twist wrapped, the twisted film retains or essentially retains its twisted state and has a reduced tendency to unwrap relative to prior art oriented polypropylene films. It has been discovered that the development of a non-recoverable yield point in an extruded film of the present invention is time dependent. Thus an extruded film measured for twist retention immediately after extrusion might not exhibit the desired twist retention, yet the same film when tested several hours to several days later will exhibit acceptable twist retention. The inventor believes the theory that attaining a non-recoverable yield point in an extruded film according to this invention is enhanced by allowing the film to age and/or the crystallization to advance. Machine direction yield strength and the development of the non-recoverable yield point are, however, strongly dependent on ambient aging, and will increase about 10% within seven days of ambient aging. By comparison, a 100% polypropylene film will only increase in yield strength but 2% in the same time frame.

The films according to the invention may be obtained also as co-extruded and multi-layer structures, such as one side sealable films, two sides sealable films, coated films, tinted films, cavitated films, untreated films, one side treated films, two sides treated films, and metallized plastic films. The inventive films can also be laminated to conventional oriented polypropylene films, polyester films, and others to impart twist retention and dead fold properties to such multi layer composite structures.

The inventive films can furthermore be pigmented with known white and color pigments or fillers such as calcium carbonate or titanium dioxide to provide desired opacity. To the film formulations can also be added known organic fillers, such as nylon 11 and polystyrene. Alternatively, the films can be used if desired in conjunction with colored or metallized plastic films, or with foils. If antistatic character is desired, known antistatic compositions may be incorporated in the film, as well as slip and antiblocking additives.

The following examples are reported to illustrate the preparation and the characteristics of the films according to the invention.

Example 1

72 parts by weight of isotactic polypropylene (Himont, Moplen S38F) having MFR = 1.8 and MP: 166°C, 12 parts by weight linear polyethylene (DSM, Stamylex 7058) having MFI = 12, density 0.952 and MP 131°C, and 16 parts by weight of hydrogenated polycyclopentadiene (Exxon, Escorez 5320) having a molecular weight of 650 and softening point of 120°C were mixed in the dry state and fed to an extruder to obtain a homogeneous molten composition, which was then cooled and pelletized. A multilayer film, prepared by extrusion of the pelletized homogeneous composition, was then stretched in a planar stretching Brückner machine with a stretch ratio of 4:1 in the longitudinal (machine) direction at a temperature of between 120 and 124°C, and with a stretch ratio of 9:1 in the transverse direction at a temperature of between 145° and 168°C. The obtained film is 22 microns thick and shows good transparency and rigidity. The main charateristics of the film are reported in Table 1.

The film was employed in packaging hard candies using a high speed twist wrapping machine, in comparison with a conventional rigid PVC 26 micron thick film. The film of the present invention exhibited stable twist retention at least equivalent to that of the PVC film, and at a reduced thickness and density relative to the PVC film.

Example 2

Operating as in Example 1, a film was prepared employing the following mixture: isotactic polypropylene (Neste VB 1943B) having MFR = 2 and MP 166°C; 75 parts by weight linear polyethylene (Solvay, Eltex HD B4020) having MFI = 6, density 0.954, MP 132°C, and 15 parts by weight of a hydrocarbon resin (Arakawa, Arkon P125) of MW 820 and softening point 125°C.

The film was very rigid, slippery, with good transparency and good resistance to tearing and fissuring.

The film was printed and used for packaging soft candies with good results.

The characteristics are reported in Table 1.

Examples 3 to 5

Operating as in Example 2 and with the same amounts of the three components, different types of linear polyethylene were tried, and precisely:

in Example 3:    Linear polyethylene (Solvay, Eltex HD 1016) MFI = 5, density 0.963, MP 136°C;

in Example 4:    Linear polyethylene (DSM, Stamylex 9089F) MFI = 25, density 0.963, MP 136°C;

in Example 5:    Linear polyethylene (BP Chem. Rigidex RD6070Fa) MFI = 20, density 0.963, Mp 136°C.

The characteristics of the obtained films, as reported in Table 1, are similar to the characteristics of the films of Example 2. With increasing density of the polyethylene a slight decrease of the transparency was observed.

Example 6

The process of Example 1 was followed substituting a statistical propylene-ethylene copolymer (Solvay, ELTEX KL 415) for isotactic polypropylene. The propylene-ethylene copolymer had approximately 2.5% ethylene. The remaining components were unchanged. The mixture was melted and homogenized in a twin-screw extrusion apparatus, granulated and then extruded into a film and oriented in two directions. Stretch ratios of 4.8:1 (longitudinal) and 9.5:1 (transversal) were employed.

The resulting film exhibited good mechanical and optical characteristics and excellent twist retention.

The characteristics are reported in Table 1.

Example 7

To the polymer mixture of Example 1, 5% by weight of a white pigment ($TiO_2$) was added to each of the two skin layers of homopolymer polypropylene.

The opaque lucent film of 25 micron thickness obtained had the desired mechanical characteristics and was used instead of waxed paper (52 $g/m^2$) for wrapping soft candies.

The characteristics are reported in Tables 1, 2, 3, 4 and 5.

TABLE 1

| Example | Thickness (Microns) | Tensile Strength ($Kg/mm^2$) | | Elongation At Break (%) | |
|---|---|---|---|---|---|
| | | L | T | L | T |
| 1 | 22 | 11.2 | 24 | 240 | 40 |
| 2 | 25 | 10 | 24 | 180 | 28 |
| 3 | 20 | 15 | 27 | 235 | 47 |
| 4 | 25 | 10.6 | 24 | 260 | 46 |
| 5 | 17 | 12.7 | 28 | 268 | 45 |
| 6 | 20 | 9.8 | 24 | 195 | 48 |
| 7 | 25 | 11.4 | 25 | 220 | 40 |
| Courtaulds Shorko SHX 800 | 24 | 11.9 | | 160 | |

L = Longitudinal T = Transversal Methods of test:

Tensile Strength, elongation at break, yield strength:

ASTM D 882-80

8

TABLE 2

| Examples | L Yield Strength (Kg/mm$^2$) | Haze | Gloss |
|---|---|---|---|
| 1 | 4 | 1.0 | 85 |
| 2 | 5.3 | 1.2 | 84 |
| 3 | 7.0 | 1.4 | 80 |
| 4 | 5.6 | 1.5 | 78 |
| 5 | 7.1 | 1.5 | 78 |
| 6 | 4.0 | 1.2 | 82 |
| 7 | 4.2 | 75 | 86 |
| Courtaulds Shorko SHX 800 | 4.9 | 1.4 | 95 |

L = Longitudinal   T = Transversal Methods of test:

Tensile Strength, elongation at break, yield strength:

ASTM D 882-80 Haze:

ASTM D 1003-61 Gloss:

ASTM D 2457-70, at 45 °

TABLE 3

| | Present Invention Films | | | | | Control Films | | |
|---|---|---|---|---|---|---|---|---|
| | A | B | C | D | E | F | G | H |
| Elastic Modulus ASTM D882 x $10^3$ psi (kPa) | 387 (2.67) | 359 (2.47) | 363 (2.50) | 355 (2.45) | | 445 (3.07) | 296 (2.04) | 349 (2.40) |
| WVTR[1] ASTM F372 | 0.22 (5.6) | 0.18 (4.6) | 0.17 (4.3) | 0.18 (4.6) | 0.14 (3.6) | 0.13 (3.3) | 0.31 (7.9) | 0.21 (5.3) |
| $O_2TR$[2] ASTM D3985 | 47.0 (1190) | 53.5 (1360) | 42.1 (1070) | 42.6 (1080) | 44.9 (1140) | 36.6 (930) | 94.8 (2410) | 51.4 (1310) |
| % glassy resin | 20 | 12 | 15 | 17.5 | 20 | 30 | 0 | unknown |

Film A - 88-95 gauge, polypropylene 70 weight %, polyethylene 10 weight %, Escorez 5320 20 weight %.

Film B - 71-74 gauge, polypropylene 70 weight %, polyethylene 13 weight %, Escorez 5320 12 weight %, Arkon P-125 resin 5 weight %.

Film C - 90 gauge, white opaque (65% light transmission), polypropylene 71 weight %, polyethylene 10 weight %, Arkon P125 15 weight %, $TiO_2$ 4 weight %.

Film D - 115-120 gauge, white opaque (49% light transmission); polypropylene 51.5 weight %, polyethylene 25 weight %; Arkon P125 17.5 weight %, $CaCO_3$ 6 weight %.

Film E - prepared following the Example 1-a in European Patent Application 0288227 (Exxon) using a 50:50 concentrate blend of molten polypropylene and low molecular weight resin (Escorez 5320). The concentrate blend and isotactic polypropylene were melt blended at 40:60% by weight, respectively, and extruded to form an 80 gauge film.

Film F - same concentrate as in Film E, but mixed with polypropylene at 60:40% by weight as in Example 1-b of said Patent Application; 80 gauge film.

Film G - Proponite 90 A/NS, SRNOA261E-4, 91 gauge, biaxially oriented polypropylene.

Film H - Courtaulds Shorko SHX800, 95 gauge.

[1] reported in units of gm/100 in.$^2$/24 hours per mil @ 100°F (38°C), 90% RH. Figures in brackets are in units of g/m$^2$ per hour per mm.

[2] reported in units of cc/100 in.$^2$/24 hours per mil @ 23°C, 50-75% RH. Figures in brackets are in units of cm$^3$/m$^2$ per hour per mm.

TABLE 4

| Twist Retention | | |
|---|---|---|
| Sample # | Retained Angle | Percentage Retention |
| 1. Control Film (Exxon, 30% Escorez modifier) | 270° | 75 |
| 2. Control Film (Shorko SHX 800 from Courtaulds) | 270° | 75 |
| 3. Inventive Film ("Twist 5") | 300° | 83 |

TABLE 5

DEAD FOLD PROPERTY ANALYSIS

Retention Angle, in degrees (and % crease retention)

Sentinel Sealer Ambient/0.5 sec. dwell/20 PSI (138 kPa)/2 min.

to reading

| | | Invention | | Controls | | | |
|---|---|---|---|---|---|---|---|
| | | FIAP TWIST #5 | FIAP TWIST #8 | HERC. BX313 | 90 A/NS | FIAP Twist #1 | Shorko SHX 800 |
| MD | I/I | 90(50) | 100(44) | 115(36) | 145(19) | 75(58) | 75(58) |
| | O/O | 95(47) | 95(47) | 130(28) | 180(0) | 110(39) | 92(49) |
| TD | I/I | 75(58) | 95(47) | 120(33) | 150(17) | 75(58) | 79(56) |
| | O/0 | 90(50) | 90(50) | 130(28) | 150(17) | 90(50) | 130(28) |
| Overall Average | | 85(51) | 95(47) | 130(31) | 155(13) | 85(51) | 94(48) |

I/I indicates inside to inside fold from a wound reel
O/O indicates outside to outside fold from a wound reel
Lower degree values and higher crease retention represent better dead fold.

Twist 1 is a binary system of 78% polypropylene and 22% Escorez 5320 resin.

Twist 5 is an inventive pigmented ternary system of 70% polypropylene, 20% Escorez 5320 resin and 10% HDPE.

Twist 8 is an inventive quaternary system of printed film of 70% polypropylene, 12% Escorez resin, 5% Arkon P140 resin, and 13% HDPE.

**Claims**

1. A biaxially oriented polyolefin film with improved twist retention, and dead fold property, and reduced water vapor transmission rate and oxygen transmission rate, comprising a mixture of (1) a polymer of propylene selected from the group consisting of isotactic polypropylene and propylene-ethylene copolymers; (2) high density polyethylene; and (3) at least one glassy, amorphous resin having a molecular weight of from 500 to 2,000, wherein the low molecular weight resin is present in an amount greater than 5 percent by weight.

2. The film according to claim 1, characterised in that said polypropylene has a melt flow rate of from 0.5 to 10, as measured at 230°C/2.16 kg and a melting point of from 155° to 170°C.

3. The film according to claim 1, wherein the polymer of propylene is a propylene-ethylene copolymer which has a content of ethylene of from 0.1% to 10% by weight, and the ethylene units are distributed randomly or in blocks in the copolymer.

4. The film according to any one of claims 1 to 3, characterised in that said polyethylene has a melt flow index of from 0.1 to 40, as measured at 190°C/5.0 kg and a density of from 0.940 to 0.965.

5. The film according to any one of claims 1 to 4, characterised in that said glassy resin is at least partially hydrogenated and has a softening point of from 70° to 170°C.

6. The film according to any one of claims 1 to 5, characterised in that said glassy resin is selected from the group consisting of pine resins constituted by rosin derivatives, polyterpene resins, and mixtures thereof.

7. The film according to any one of claims 1 to 5, characterised in that said glassy resin is selected from the group consisting of aliphatic hydrocarbon resins, alicyclic hydrocarbon resins, aromatic hydrocarbon resins, aliphatic-aromatic hydrocarbon copolymer resins, and mixtures thereof.

8. The film according to claim 7, characterised in that said glassy resin is selected from the group consisting of alkylphenolic, alkyl-terpene resins, and mixtures thereof.

9. The film according to claim 7, characterised in that said glassy resin is selected from the group consisting of polymers derived from the polymerisation of terpene monomers, terpene dimers, alicyclic monomers, monocyclic monomers, bicyclic monomers, and mixtures thereof.

10. The film according to any one of claims 1 to 9, characterised in that the mixture consists of from 40 to 90% by weight propylene polymer, from 5 to 25% by weight, polyethylene, and from 5 to 35% by weight glassy resin.

11. The film according to any one of claims 1 to 10, wherein the film is a co-extruded or multi-layer structure.

12. The film according to any one of claims 1 to 11, further comprising white or colored pigments.

13. The film according to any one of claims 1 to 12, wherein the water vapor transmission through the film is less than 0.22 grams water per 100 square inches of film per 24 hours per mil (5.6 $gm^{-2}$ per hour per mm) when measured at 100°F (38°C) and 90% relative humidity.

14. The film according to any one of claims 1 to 13, wherein the oxygen transmission is less than 54 cubic centimetres of oxygen per 100 square inches of film per 24 hours per mil (1370 $cm^3$ $m^{-2}$ per hour per mm) when measured at 23°C and 50-75% relative humidity.

15. The film according to any one of claims 1 to 14, wherein two glassy resins are present in the mixture.

16. A multilayer composite film structure comprising the film of claim 1.

17. A process for the preparation of a biaxially oriented polyolefin film showing improved twist retention and comprising a mixture of propylene polymer selected from the group consisting of isotactic polypropylene and propylene-ethylene copolymer; high density polyethylene; and a glassy, amorphous resin, said process comprising the steps of:

a) mixing the three components;

b) extruding the mixture to obtain a homogeneous sheet; and

c) orienting the sheet in both the transverse and longitudinal direction to form a film.

18. The process of claim 17, characterised in that the composition by weight of said mixture comprises:

40 to 90% by weight propylene polymer;

5 to 25% by weight polyethylene;

5 to 35% by weight glassy resin.

19. The process of either claim 17 or claim 18, characterised in that the stretching is both longitudinal and transverse, carried out by stretching in the longitudinal direction at 100 to 140°C with a stretch ratio of from 3.5/1 to 8/1, and in the transverse direction at 130 to 180°C and with a stretch ratio of from 5/1 to 10/1.

20. The process of any one of claims 17 to 19, wherein, after mixing the components in step a), the process further comprises:

b) extruding the mixture to obtain a homogeneous, molten composition;

c) cooling and pelletizing the composition;

d) extruding the pelletised composition to produce a sheet; and

e) orienting the sheet in both the transverse and longitudinal directions to obtain a film.

21. A packaged item, wherein the item is packaged in the film of claim 1.

**Patentansprüche**

1. Biaxial orientierte Polyolefinfolie mit verbesserter Verdrehungsretention und der Eigenschaft, bleibende Falten zu bilden, und verringerter Wasserdampfdurchlässigkeit und Sauerstoffdurchlässigkeit, umfassend ein Gemisch aus (1) einem Polymer von Propylen, ausgewählt aus der Gruppe, bestehend aus isotaktischem Polypropylen und Propylen/Ethylen-Copolymeren; (2) Polyethylen hoher Dichte und (3) mindestens einem glasartigen, amorphen Harz mit einem Molekulargewicht von 500 bis 2000, wobei das niedermolekulare Harz in einer Menge größer 5 Gew.-% vorhanden ist.

2. Folie nach Anspruch 1, dadurch gekennzeichnet, daß das Polypropylen eine Schmelzflußrate von 0,5 bis 10, gemessen bei 230°C/2,16 kg, und einen Schmelzpunkt von 155 bis 170°C besitzt.

3. Folie nach Anspruch 1, wobei das Polymer von Propylen ein Propylen/Ethylen-Copolymer ist mit einem Ethylengehalt von 0,1 bis 10 Gew.-% und wobei die Ethyleneinheiten statistisch oder in Blöcken in dem Copolymer verteilt sind.

4. Folie nach einem der Ansprüche 1 bis 3, dadurch gekennzeichnet, daß das Polyethylen einen Schmelzindex von 0,1 bis 40, gemessen bei 190°C/5,0 kg, und eine Dichte von 0,940 bis 0,965 besitzt.

5. Folie nach einem der Ansprüche 1 bis 4, dadurch gekennzeichnet, daß das glasartige Harz mindestens ein partiell hydriertes ist und einen Erweichungspunkt von 70 bis 170°C besitzt.

6. Folie nach einem der Ansprüche 1 bis 5, dadurch gekennzeichnet, daß das glasartige Harz ausgewählt ist aus der Gruppe, bestehend aus Terpentinharzen, bestehend aus Rosinderivaten, Polyterpenharzen und Gemischen davon.

7. Folie nach einem der Ansprüche 1 bis 5, dadurch gekennzeichnet, daß das glasartige Harz ausgewählt ist aus der Gruppe, bestehend aus aliphatischen Kohlenwasserstoffharzen, alicyclischen Kohlenwasserstoffharzen, aromatischen Kohlenwasserstoffharzen, aliphatisch-aromatischen Kohlenwasserstoff-Copolymerharzen und Gemischen davon.

8. Folie nach Anspruch 7, dadurch gekennzeichnet, daß das glasartige Harz ausgewählt ist aus der Gruppe, bestehend aus Alkylphenol-, Alkylterpen-Harzen und Gemischen davon.

13

**9.** Folie nach Anspruch 7, dadurch gekennzeichnet, daß das glasartige Harz ausgewählt ist aus der Gruppe, bestehend aus Polymeren, erhalten durch Polymerisation von Terpenmonomeren, Terpendimeren, alicyclischen Monomeren, monocyclischen Monomeren, bicyclischen Monomeren, und Gemischen davon.

**10.** Folie nach einem der Ansprüche 1 bis 9, dadurch gekennzeichnet, daß das Gemisch aus 40 bis 90 Gew.-% Propylenpolymer, 5 bis 25 Gew.-% Polyethylen und 5 bis 35 Gew.-% glasartigem Harz besteht.

**11.** Folie nach einem der Ansprüche 1 bis 10, wobei die Folie eine coextrudierte oder mehrschichtige Struktur besitzt.

**12.** Folie nach einem der Ansprüche 1 bis 11, umfassend ferner weiße oder Farbpigmente.

**13.** Folie nach einem der Ansprüche 1 bis 12, wobei die Wasserdampfdurchlässigkeit durch die Folie kleiner 0,22 g Wasser pro 100 inch$^2$ Folie pro 24 h pro mil (5,6 g•m$^{-2}$ pro h und mm) besitzt, gemessen bei 100°F (38°C) und 90% relativer Feuchte.

**14.** Folie nach einem der Ansprüche 1 bis 13, wobei die Sauerstoffdurchlässigkeit weniger als 54 cm$^3$ Sauerstoff pro 100 inch$^2$ Folie pro 24 h pro mil (1370 cm$^3$ •m$^{-2}$ pro h und mm) beträgt, gemessen bei 23°C und 50-75% relativer Feuchte.

**15.** Folie nach einem der Ansprüche 1 bis 14, wobei zwei glasartige Harze in dem Gemisch vorhanden sind.

**16.** Mehrschichtige Verbundfolienstruktur, umfassend die Folie nach Anspruch 1.

**17.** Verfahren zur Herstellung einer biaxial orientierten Polyolefinfolie mit verbesserter Verdrehungsretention und umfassend ein Gemisch aus Propylenpolymer, ausgewählt aus der Gruppe, bestehend aus isotaktischem Polypropylen und Propylen/Ethylen-Copolymer, Polyethylen hoher Dichte und einem glasartigen amorphen Harz, wobei das Verfahren umfaßt die Stufen:
a) Mischen der drei Komponenten;
b) Extrudieren des Gemisches, um eine homogene Bahn zu erhalten, und
c) Orientieren der Bahn sowohl in Quer- als auch in Längsrichtung zur Bildung einer Folie.

**18.** Verfahren nach Anspruch 17, dadurch gekennzeichnet, daß die Masse, bezogen auf das Gewicht des Gemisches, umfaßt:
40 bis 90 Gew.-% Propylenpolymer,
5 bis 25 Gew.-% Polyethylen,
5 bis 35 Gew.-% glasartiges Harz.

**19.** Verfahren nach Anspruch 17 oder Anspruch 18, dadurch gekennzeichnet, daß das Strecken sowohl in Längs- als auch in Querrichtung durchgeführt wird durch Strecken in Längsrichtung bei 100 bis 140°C mit einem Streckverhältnis von 3,5/1 bis 8/1 und in Querrichtung bei 130 bis 180°C und mit einem Streckverhältnis von 5/1 bis 10/1.

**20.** Verfahren nach einem der Ansprüche 17 bis 18, wobei nach dem Vermischen der Komponenten in Stufe a) das Verfahren ferner umfaßt:
b) Extrudieren des Gemisches, um eine homogene, geschmolzene Masse zu erhalten,
c) Kühlen und Pelletisieren der Masse,
d) Extrudieren der pelletisierten Masse zur Bildung einer Bahn und
e) Orientieren der Bahn sowohl in Quer- als auch in Längsrichtung, um eine Folie zu erhalten.

**21.** Verpackter Gegenstand, wobei der Gegenstand in die Folie nach Anspruch 1 verpackt ist.

**EP 0 441 027 B1**

**Revendications**

1. Film de polyoléfine à orientation bi-axiale présentant une rétention de torsion améliorée et des propriétés de pliage à angle vif et un taux réduit de transmission de la vapeur et de transmission de l'oxygène, comprenant un mélange de (1) un polymère de propylène choisi dans le groupe constitué de polypropylène isotactique et de copolymères de propylène-éthylène; (2) le polyéthylène haute densité; et (3) au moins une résine amorphe vitreuse ayant un poids moléculaire allant de 500 à 2000, dans lequel la résine de faible poids moléculaire est présente en quantité supérieure à 5 pour-cent en poids.

2. Film selon la revendication 1, caractérisé en ce que ledit polypropylène possède un taux d'écoulement à l'état fondu de 0,5 à 10, tel que mesuré à 230°C/2,16 kg et un point de fusion de 155 à 170°C.

3. Film selon la revendication 1, dans lequel le polymère de propylène est un copolymère de propylène-éthylène dont la teneur en éthylène varie de 0,1% à 10% en poids, et dans lequel les motifs d'éthylène sont répartis statistiquement ou en blocs dans le copolymère.

4. Film selon l'une quelconque des revendications 1 à 3, caractérisé en ce que ledit polyéthylène possède un indice de fluidité de 0,1 à 40, tel que mesuré à 190°C/5,0 kg et une masse volumique de 0,940 à 0,965.

5. Film selon l'une quelconque des revendications 1 à 4, caractérisé en ce que ladite résine vitreuse est hydrogénée en partie au moins et présente un point de ramollissement de 70° à 170°C

6. Film selon l'une quelconque des revendications 1 à 5, caractérisé en ce que ladite résine vitreuse est choisie dans le groupe comprenant les résines de pin constituées par les dérivés de la colophane, les résines polyterpéniques, et les mélanges de ceux-ci.

7. Film selon l'une quelconque des revendications 1 à 5, caractérisé en ce que ladite résine vitreuse est choisie dans le groupe constitué de résines à base d'hydrocarbures aliphatiques, de résines à base d'hydrocarbures alicycliques, de résines à base d'hydrocarbures aromatiques, de résines à base de copolymères d'hydrocarbures aliphatiques et aromatiques, et de mélanges de celles-ci.

8. Film selon la revendication 7, caractérisé en ce que ladite résine vitreuse est choisie dans le groupe constitué de résines alkylphénoliques, de résines alkylterpéniques, et de mélanges de celles-ci.

9. Film selon la revendication 7, caractérisé en ce que ladite résine vitreuse est choisie dans le groupe constitué de polymères dérivés de la polymérisation de monomères terpéniques, de dimères terpéniques, de monomères alicycliques, de monomères monocyliques, de monomères bicycliques, et de mélanges de ceux-ci.

10. Film selon l'une quelconque des revendications 1 à 9, caractérisé en ce que le mélange est constitué de 40 à 90% en poids de polymère de propylène, de 5 à 25% en poids de polyéthylène, et de 5 à 35% en poids de résine vitreuse.

11. Film selon l'une quelconque des revendications 1 à 10, dans lequel le film se présente sous forme de structure coextrudée ou multicouches.

12. Film selon l'une quelconque des revendications 1 à 11, comprenant en outre des pigments blancs ou colorés.

13. Film selon l'une quelconque des revendications 1 à 12, dans lequel la transmission de la vapeur à travers le film est inférieure à 0,22 g d'eau par 100 pouces carrés de film par 24 heures et par mil (5,6 $gm^{-2}$ par heure et par mm) telle que mesurée à 100°F (38°C) et sous humidité relative de 90%.

14. Film selon l'une quelconque des revendications 1 à 13, dans lequel la transmission de l'oxygène est inférieure à 54 centimètres cubes d'oxygène par 100 pouces carrés de film par 24 heures et par mil (1370 $cm^{-3}$ $m^{-2}$ par heure et par mm) telle que mesurée à 23°C et sous humidité relative de 50 à

**EP 0 441 027 B1**

75%.

15. Film selon l'une quelconque des revendications 1 à 14, dans lequel deux résines vitreuses sont présentes dans le mélange.

16. Structure pelliculaire composite multicouches comprenant le film selon la revendication 1.

17. Procédé de préparation d'un film de polyoléfine à orientation biaxiale présentant une rétention de torsion améliorée et comprenant un mélange de polymère de propylène choisi dans le groupe constitué de polypropylène isotactique et de copolymère de propylène-éthylène; de polyéthylène haute densité; et d'une résine vitreuse amorphe, ledit procédé comprenant les étapes consistant à
   a) mélanger les trois composants;
   b) extruder le mélange pour obtenir une feuille homogène; et
   c) orienter la feuille aussi bien dans le sens transversal que longitudinal pour produire un film.

18. Procédé selon la revendication 17, caractérisé en ce que la composition dudit mélange comprend en poids:
   40 à 90% en poids de polymère de propylène;
   5 à 25% en poids de polyéthylène
   5 à 35% en poids de résine vitreuse.

19. Procédé selon la revendication 17 ou la revendication 18, caractérisé en ce que l'étirage se fait aussi bien dans le sens longitudinal que transversal, et qu'il s'effectue en étirant dans le sens longitudinal à une température de 100 à 140°C suivant un rapport d'étirage allant de 3,5/1 à 8/1, et dans le sens transversal à une température de 130 à 180°C suivant un rapport d'étirage allant de 5/1 à 10/1.

20. Procédé selon l'une quelconque des revendications 17 à 19, dans lequel, suite au mélange des composants dans l'étape a), le procédé comprend en outre:
   b) l'extrusion du mélange pour obtenir une composition fondue homogène;
   c) le refroidissement et la granulation de la composition;
   d) l'extrusion de la composition granulée pour produire une feuille et
   e) l'étirage de la feuille aussi bien dans le sens transversal que dans le sens longitudinal pour obtenir un film.

21. Article emballé, dans lequel l'article est emballé avec le film selon la revendication 1.

16

FIG.1

FIG.2

17

*FIG.3*

PRINTED
PVC
TWIST — 10

CAST PP — 9

— 8
POLYSTYRENE

— 7
TWIST#8

— 6
TWIST#1

— 5
TWIST#5

— 4
90A/NS

— 3
HDPE-MONO.ORIENT

— 2
HERCULES BX 313

— 1
CELLOPAN

4/26/90 FLAP VARIETY PACK

MD TENSILES FOR YIELD COMPARISON

NOTE: ALL FILMS TESTED ON 20 POUND SCALE
EXCEPT 'HDPE MONO.ORIENT'(TESTED ON 50lb)